# EUROPÄISCHE PATENTSCHRIFT

(11) **EP 2 622 718 B1**
(45) Veröffentlichungstag und Bekanntmachung des Hinweises auf die Patenterteilung: **01.08.2018**
(21) Anmeldenummer: 11775923.3
(22) Anmeldetag: 28.09.2011
(51) Int. Cl.: H02K 5/14, H01R 39/38

(54) **KOHLEBÜRSTENMODUL**
CARBON BRUSH MODULE
MODULE DE BALAIS EN CARBONE

(30) Priorität: 01.10.2010 DE 102010041871
(43) Veröffentlichungstag der Anmeldung: 07.08.2013
(73) Patentinhaber: Schunk Carbon Technology S.r.l., 20012 Magenta (MI) (IT)
(72) Erfinder: TONTSCH, Klaus-Georg, 35444 Biebertal (DE); MARINELLI, Ivano, I-20013 Magenta (IT)
(74) Vertreter: advotec.
(86) Internationale Anmeldenummer: PCT/EP2011/066877
(87) Internationale Veröffentlichungsnummer: WO 2012/041911

(56) Entgegenhaltungen:
- EP-A1- 0 586 723
- DE-A1-102005 048 191
- DE-A1-102008 041 811
- DE-A1-102009 020 915

## Beschreibung

Die vorliegende Erfindung betrifft ein Kohlebürstenmodul nach dem Oberbegriff des Anspruchs 1 oder des Anspruchs 2. Kohlenbürstenmodule der eingangs genannten Art dienen zur Installation von Kohlebürsten auf einem Bürstenträger eines Elektromotors, derart, dass die Kontaktflächen der Kohlebürsten in elektrisch leitendem Kontakt mit den Lamellen eines Kommutators des Elektromotors gebracht werden können. Hierzu müssen die Kohlebürsten bei gleichzeitiger Erzeugung des notwendigen Kontaktdrucks auf dem Bürstenträger in einem sog. Kohlebürstenhalter angeordnet werden, wobei der Kohlebürstenhalter die Kohlebürste elektrisch gegenüber dem Bürstenträger isolierend aufnimmt. Gleichzeitig dient der Kohlebürstenhalter zur Aufnahme einer regelmäßig als Schraubenfeder ausgeführten Druckfeder, an der sich die Kohlebürste zur Erzeugung der notwendigen Kontaktkraft rückwärtig abstützt.

Einem Bürstenhalter kommen demnach sehr unterschiedliche Funktionen zu, da einerseits eine Führungseinrichtung, die mit Vorspannung durch die Federeinrichtung eine Führungs- oder Anstellbewegung der Kontaktfläche der Kohlebürste gegen den Kommutator ermöglicht, und andererseits eine Befestigungseinrichtung zur Verfügung gestellt werden muss, die eine sichere Befestigung der Kohlebürste auf dem Bürstenträger bei gleichzeitiger Isolierung ermöglicht.

Bei den bislang zur flächenparallelen Anordnung von Kohlebürsten auf einem Bürstenträger eingesetzten Bürstenhaltern werden diese Funktionen durch verschiedene Bauteile des Bürstenhalters ermöglicht, so dass beispielsweise Bürstenhalter bekannt sind, bei denen die Befestigungseinrichtung als Kunststoffbauteil und die Führungseinrichtung als Metallbauteil ausgebildet sind, so dass diese Bürstenhalter entsprechend aufwendig aufgebaut und herzustellen sind.

So zeigt die DE 10 2005 048 191 A1 einen Kohlebürstenhalter für einen Elektromotor, bei dem in einem Gehäuse eine köcherförmige Kohlebürstenführung angeordnet ist, in der eine Kohlebürste geführt wird. Die Kohlebürstenführung setzt sich aus einer ersten Teilschale aus isolierendem Kunststoff und einer zweiten Teilschale aus Metall zusammen.

Aus der EP 0 586 723 A1 ist eine geräuschgedämpfte zweiteilige Bürstenhalterung aus Kunststoff bekannt, die im Wesentlichen aus einem an einem Motorgehäuse befestigten Grundkörper und einer an dem Grundkörper verrastbaren Bürstenplatte besteht. An der Verrastung zwischen Bürstenplatte und Grundkörper sind Dämpfungshülsen zur Geräuschdämpfung vorgesehen.

Die DE 10 2008 041 811 A1zeigt einen Universalmotor mit einer Bürste, wobei die Bürste in einem Bürstenköcher aus Messing angeordnet ist, der wiederum von einem Kunststoffgehäuse umgeben ist. Das Gehäuse weist Bohrungen zur Verschraubung mit einem Lagerschild auf, wobei zwischen Gehäuse und Lagerschild sowie zwischen Bürstenköcher und Gehäuse Wärmeableitelemente zur Verbesserung der Entwärmung des Bürstensystems angeordnet sind.

Die DE 10 2009 020 915 A1 zeigt einen Kohlebürstenhalter für einen Elektromotor, bei dem in einem Kunststoffgehäuse eine Kohlebürste geführt wird. Die Kohlebürstenführung hat in sich eingebettet Befestigungsanschlussmittel. Der vorliegenden Erfindung liegt daher die Aufgabe zu Grunde, ein Kohlebürstenmodul vorzuschlagen, das einen Bürstenhalter aufweist, der eine vergleichsweise einfache Herstellung ermöglicht.

Zur Lösung dieser Aufgabe weist das erfindungsgemäße Kohlebürstenmodul die Merkmale des Anspruchs 1 auf. Weiterhin wird die Aufgabe durch die Merkmale des Anspruchs 2 gelöst.

Bei dem erfindungsgemäßen Kohlebürstenmodul sind sowohl die Befestigungseinrichtung als auch die Führungseinrichtung des Bürstenhalters durch ein einstückig aus einem Isolationswerkstoff hergestelltes Aufnahmeteil gebildet.

Erfindungsgemäß kommt demnach dem Aufnahmeteil die Doppelfunktion zu, zum einen eine isolierende Befestigung auf dem Bürstenträger zu ermöglichen und zum anderen für eine für die Funktion der Kohlebürste notwendige Führungseinrichtung zu sorgen. Als Isolationswerkstoff für das Aufnahmeteil kann beispielsweise ein Kunststoff- oder ein Keramikmaterial zum Einsatz kommen.

Bei einer ersten Variante des erfindungsgemäßen Kohlebürstenmoduls sind die Kontakteinrichtung und die Kohlebürste als eine zusammenhängend ausgebildete Montageeinheit ausgebildet und die Kontakteinrichtung ist zur mechanisch fixierten Verbindung der Montageeinheit mit dem Aufnahmeteil mit einem Anschlussende, das zum Anschluß an einen Stromleiter dient, mechanisch fixiert in einer Wandausnehmung des Aufnahmeteils aufgenommen.

Bei dieser ersten Variante sind vorteilhaft lediglich zwei Montageeinheiten bei der Herstellung des Kohlebürstenmoduls miteinander zu verbinden, wobei die erste Montageeinheit aus dem Aufnahmeteil besteht, das die Befestigungs- und Führungseinrichtung ineinander vereint, und die zweite Montageeinheit aus der mit der Kontakteinrichtung bereits zusammenhängend ausgebildeten Kohlebürste besteht. Zur Herstellung dieser ersten Ausführungsform oder Variante des Kohlebürstenmoduls müssen also lediglich die beiden Montageeinheiten miteinander gefügt werden.

Bei der zweiten Variante des erfindungsgemäßen Kohlebürstenmoduls ist das Aufnahmeteil mit der Kontakteinrichtung einstückig zusammenhängend ausgebildet, derart, dass ein Anschlussende der Kontakteinrichtung, das zum Anschluß an einen Stromleiter dient, durch eine Umformung des Anschlussendes mit dem Kunststoffmaterial des Aufnahmeteils formschlüssig in eine Wandung des Aufnahmeteils eingebettet aufgenommen ist.

Vorteilhaft wird bei dieser Variante eine besonders einfache Montage zur Herstellung des Kohlebürstenmoduls dadurch ermöglicht, dass das Aufnahmeteil die Kontakteinrichtung integriert umfasst, so dass zur Herstellung des Kohlebürstenmoduls nur noch eine aus der Kohlebürste und der Federeinrichtung bestehende Baugruppe mit dem Aufnahmeteil zu verbinden ist.

Unabhängig von der jeweils bevorzugten Variante des erfindungsgemäßen Kohlebürstenmoduls liegt ganz grundsätzlich ein wesentlicher Vorteil des erfindungsgemäßen Kohlebürstenmoduls darin, dass nicht nur die Befestigungsfunktion der Befestigungseinrichtung und die Führungsfunktion der Führungseinrichtung in ein und demselben Bauteil, nämlich dem Aufnahmeteil vereint sind, sondern dass das erfindungsgemäße Kohlebürstenmodul durch einfache Definition der Befestigungspunkte oder Befestigungselemente am Aufnahmeteil so ausgebildet werden kann, dass ein leichter Austausch gegen konventionell aus einer Teilemehrheit hergestellte Kohlebürstenhalter, die auf einem Bürstenträger angeordnet sind, erfolgen kann. Somit können bestehende Elektromotoren mit den erfindungsgemäßen Kohlebürstenmodulen leicht nachgerüstet werden bzw. können bei einem notwendig werdenden Austausch der Kohlebürstenmodule aufgrund des Verbrauchs der Kohlebürsten erfindungsgemäße Kohlebürstenmodule als Ersatz für die verbrauchten Kohlebürsten verwendet werden.

Wenn bei einer besonders bevorzugten Ausführungsform des erfindungsgemäßen Kohlebürstenmoduls das Aufnahmeteil einen Aufnahmequerschnitt aufweist, der durch Überlagerung eines rechteckigen Führungsquerschnitts zur Ausbildung der Führungseinrichtung mit einem Bohrungsquerschnitt zur Ausbildung eines Aufnahmeraums für eine Federeinrichtung ausgebildet ist, lässt sich das Aufnahmeteil bzw. das erfindungsgemäße Kohlebürstenmodul mit einem minimalen Materialaufwand und in besonderer Weise platzsparend ausführen.

Wenn bei einer weiteren Ausführungsform das Aufnahmeteil im Bereich einer Kontakteinrichtungs-Aufnahme eine Zugriffsöffnung zum Zugriff auf die Kontakteinrichtung aufweist, ist einerseits der Zugriff auf den Bereich der Kontakteinrichtungs-Aufnahme zur Applikation der Kontakteinrichtung am Aufnahmeteil vereinfacht, andererseits wird der Zugriff zur Kontaktierung der Anschlusslitze der Kohlebürste verbessert.

Um einen Schutz der Kontakteinrichtung nach Installation des Kohlebürstenmoduls auf dem Bürstenträger zu ermöglichen, ist es vorteilhaft, wenn das Aufnahmeteil zum Verschluss der Zugriffsöffnung mit einer Verschlusskappe versehen ist, so dass beispielsweise im Betrieb einer Waschmaschine keine Feuchtigkeit an die Kontakteinrichtung gelangen kann.

Vorzugsweise ist die Verschlusskappe lösbar mit einem Öffnungsrand der Zugriffsöffnung verbunden ist.

Die Herstellung der Verbindung der Verschlusskappe mit dem Aufnahmeteil ist besonders komfortabel möglich, wenn die Verschlusskappe formschlüssig mit dem Aufnahmeteil verbindbar ist.

Nachfolgend wird eine bevorzugte Ausführungsform des erfindungsgemäßen Kohlebürstenmoduls anhand der Zeichnung näher erläutert.

Es zeigen:
- **Fig. 1:**: Ein Kohlebürstenmodul in einer ersten Ausführungsform in isometrischer Darstellung;
- **Fig. 2:**: ein Kohlebürstenmodul in einer zweiten Ausführungsform in isometrischer Darstellung;
- **Fig. 3:**: eine Längsschnittdarstellung des Aufnahmeteils des in **Fig. 1** dargestellten Kohlebürstenmoduls;
- **Fig. 4:**: eine Längsschnittdarstellung des Aufnahmeteils des in **Fig. 2** dargestellten Kohlebürstenmoduls;
- **Fig. 5:**: eine Querschnittdarstellung des Aufnahmeteils längs dem Schnittlinienverlauf V-V in den **Fig. 1 und 2****;**
- **Fig. 6:**: eine Frontansicht des in **Fig. 1** dargestellten Kohlebürstenmoduls;
- **Fig. 7:**: ein Kohlebürstenmodul in einer dritten Ausführungsform mit einer am Aufnahmeteil angebrachten Verschlusskappe;
- **Fig. 8:**: die Verschlusskappe gemäß **Fig. 7** in Einzeldarstellung;
- **Fig. 9:**: das Aufnahmeteil gemäß **Fig. 7** in Einzeldarstellung;
- **Fig.10:**: das Kohlebürstenmodul gemäß **Fig. 7** in Längsschnittdarstellung.

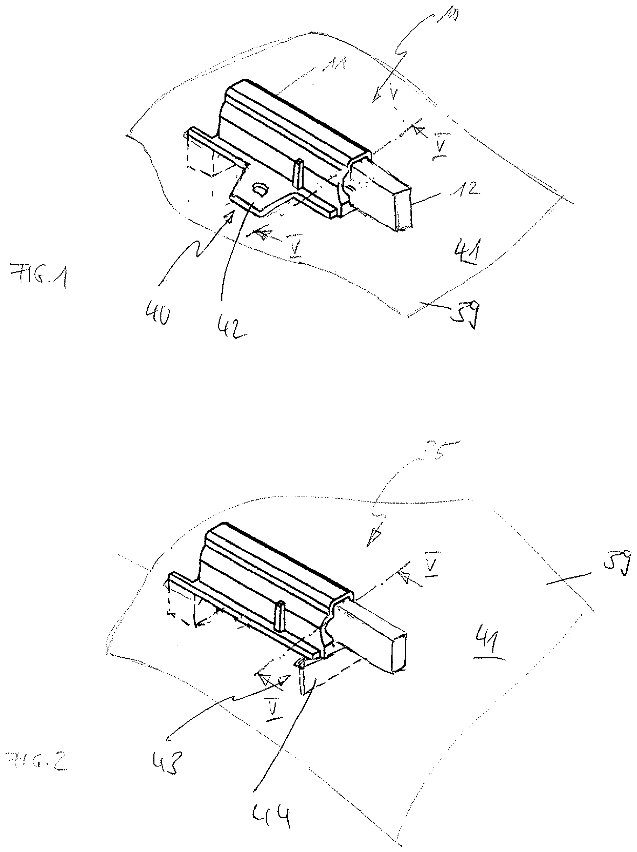

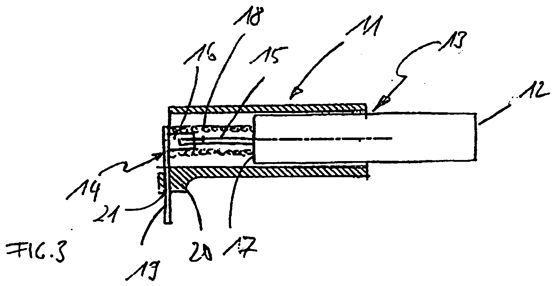

**Fig. 1** zeigt ein Kohlebürstenmodul 10 in einer ersten Ausführungsform mit einem Aufnahmeteil 11 und einer in dem Aufnahmeteil 11 aufgenommenen Kohlebürste 12. Wie eine Zusammenschau der **Fig. 1** und **Fig. 3****,** die eine Schnittdarstellung des in **Fig. 1** dargestellten Kohlebürstenmoduls 10 zeigt, deutlich macht, weist das Kohlebürstenmodul 10 das aus Kunststoff elektrisch isolierend ausgebildete Aufnahmeteil 11 mit einer Montageeinheit 13 auf, die neben der Kohlebürste 12 eine Kontakteinrichtung 14 umfasst, die über eine Kontaktlitze 15 mit der Kohlebürste 12 verbunden ist. Zur Verbindung mit der Kontaktlitze 15 weist die Kontakteinrichtung 14 einen Kontaktlitzenanschluss 16 auf, der im vorliegenden Fall gleichzeitig als Federaufnahme für eine unter Vorspannung zwischen der Kontakteinrichtung 14 und einer Litzenanschlussseite 17 der Kohlebürste 12 angeordnete Druckfeder 18 ausgebildet ist. Die Verbindung zwischen der Kontaktlitze 15 und dem Kontaktlitzenanschluss 16 der Kontakteinrichtung 14 kann als Lotverbindung, Schweißverbindung oder auch als Crimpverbindung ausgebildet sein.

Zur Herstellung einer kraftschlüssigen, mechanisch fixierten Verbindung zwischen der Montageeinheit 13 und dem Aufnahmeteil 11 ist die Kontakteinrichtung 14 mit einem Anschlussende 19, das zum Anschluss an einen hier nicht näher dargestellten äußeren Stromleiter dient, durch eine in einer Wandung 20 des Aufnahmeteils 11 ausgebildete Wandausnehmung 21 hindurchgeführt und in dieser zum Beispiel durch Klemmung fixiert ist.

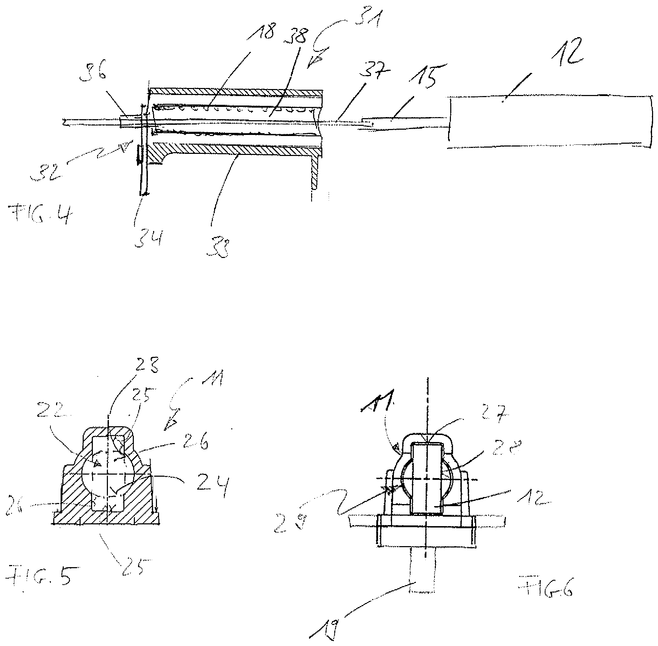

Wie die Darstellung des Querschnitts des Aufnahmeteils 11 in **Fig. 5** zeigt, ist der von der Wandung 20 des Aufnahmeteils 11 definierte Aufnahmequerschnitt 22 zusammengesetzt aus einem rechteckförmigen Führungsquerschnitt 23, der überlagert ist durch einen Bohrungsquerschnitt 24, so dass der Aufnahmequerschnitt 22 eine Mehrzahl von horizontalen Führungsflächen 25 und vertikalen Führungsflächen 26 definiert, die, wie insbesondere den **Fig. 1, 2** **und** **6** zu entnehmen ist, flächenparallel zu horizontalen Seitenflächen 27 und vertikalen Seitenflächen 28 der Kohlebürste 12 orientiert sind und somit zusammen eine Führungseinrichtung 29 für die Kohlebürste 12 bei einer Längsverschiebung der Kohlebürste 12 innerhalb des Aufnahmeteils 11 bewirkt durch die Kraft der Druckfeder 18 bilden.

**Fig. 4** zeigt ein in seiner Ausbildung von dem in **Fig. 3** dargestellten Aufnahmeteil 11 abweichend ausgebildetes Aufnahmeteil 31, das im Unterschied zu dem Aufnahmeteil 11 nicht so ausgebildet ist, dass es eine das Anschlussende 19 der Kontakteinrichtung 14 mechanisch fixierende Wandausnehmung 21 zur kraftschlüssigen Verbindung mit der Kontakteinrichtung 14 aufweist, sondern vielmehr eine Kontakteinrichtung 32 als integrales Element aufweist, derart, dass die Kontakteinrichtung 32 mit einem Anschlussende 34 formschlüssig eingebettet in eine Wandung 33 des Aufnahmeteils 31 aufgenommen ist. Dabei ist die Verbindung zwischen der Kontakteinrichtung 32 und der Wandung 33 des Aufnahmeteils 31 dadurch hergestellt, dass das Aufnahmeteil 31 durch Ausbildung der Wandung 33 um das Anschlussende 34 der Kontakteinrichtung 32 herum in einem Formungsvorgang, beispielsweise durch Umspritzen, hergestellt ist.

Ausgehend von dem in **Fig. 4** dargestellten Aufnahmeteil 31 erfolgt die Herstellung eines in **Fig. 2** dargestellten Kohlebürstenmoduls 35 derart, dass die Kohlebürste 12 zusammen mit der Druckfeder 18 als Baugruppe mit der Kontakteinrichtung 32 verbunden wird. Dabei wird die Kontaktlitze 15 der Kohlebürste 12 mit einem Kontaktlitzenanschluss 36 der Kontakteinrichtung 32 vorzugsweise durch Crimpen und Schweißen verbunden. Hierzu kann, wie in **Fig. 4** dargestellt, ein Ende der Kontaktlitze 15 durch ein geeignetes, dornartig ausgeführtes Greifwerkzeug 37 ergriffen und durch einen durch die Windungen der Druckfeder 18 begrenzten Federraum 38 hindurch bewegt und zur Überdeckung mit dem von außen an der Kontakteinrichtung 32 zugänglichen Kontaktlitzenanschluss 36 gebracht werden, um außerhalb des Aufnahmeraums des Aufnahmeteils 31 den Verbindungsvorgang zwischen der Kontaktlitze 15 und dem Kontaktlitzenanschluss 36 der Kontakteinrichtung 32 durchführen zu können.

Wie die Darstellungen in **Fig. 1** und **Fig. 2** zeigen, ist unabhängig davon, ob das Aufnahmeteil 11 unabhängig von der Kontakteinrichtung 14 ausgebildet ist oder, ob das Aufnahmeteil 31, integral mit der Kontakteinrichtung 32 ausgebildet ist, das Aufnahmeteil 11 bzw. 31 so ausgeführt, dass es einerseits zur führenden Aufnahme der Kohlebürste 12 dient, und andererseits eine Befestigung der Kohlebürste 12 bzw. des Kohlebürstenmoduls 10 bzw. 35 auf der Oberfläche eines Bürstenträgers 39 eines Elektromotors ermöglicht.

Zur Befestigung auf dem Bürstenträger 39 weist das in **Fig. 1** dargestellte Aufnahmeteil 11 des Kohlebürstenmoduls 10 eine Befestigungseinrichtung 40 mit beidseitig seitlich am Aufnahmeteil 11 ausgebildeten, sich in einer Befestigungsebene 41 auf dem Bürstenträger 39 erstreckende Befestigungslaschen 42 für beispielsweise eine Schraubverbindung mit dem Bürstenträger 39 auf.

Das Aufnahmeteil 31 des in **Fig. 2** dargestellten Bürstenträgers 35 weist eine Befestigungseinrichtung 43 mit einer im wesentlichen senkrecht zur Befestigungsebene 41 orientierten Befestigungslasche 44 auf, die beispielsweise über eine Clipsverbindung mit einer im Bürstenträger 39 ausgebildeten Laschenaufnahme verbunden ist.

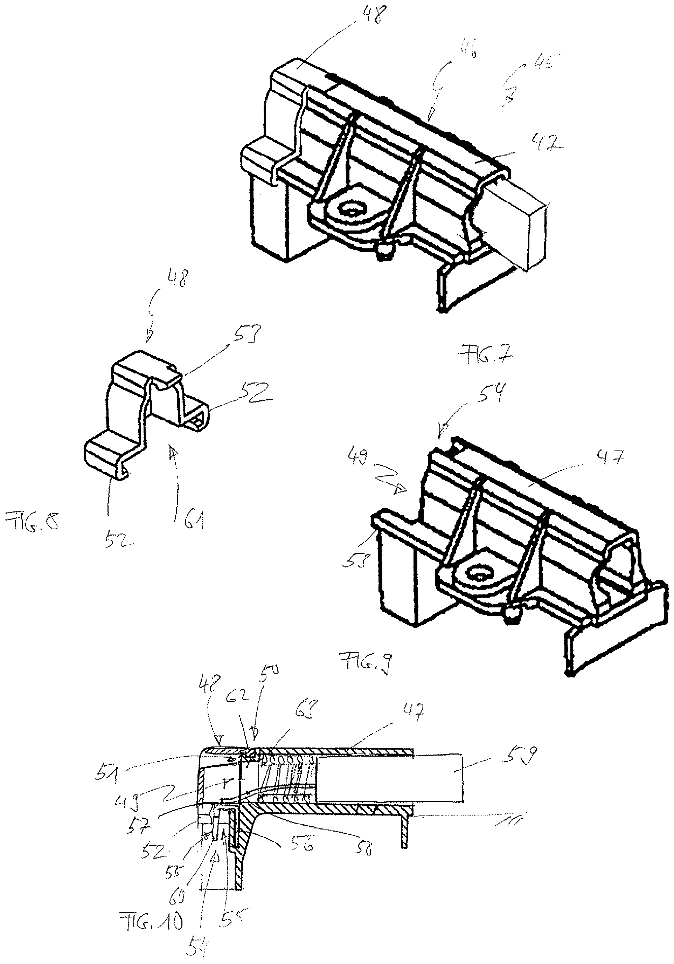

**Fig. 7** zeigt in einer weiteren Ausführungsform ein Kohlebürstenmodul 45, das einen Kohlebürstenhalter 46 aufweist, der zusätzlich zu einem Aufnahmeteil 47 eine Verschlusskappe 48 aufweist, die zum Verschluss einer rückwärtigen Zugriffsöffnung 49 (**Fig. 9**) des Aufnahmeteils 47 dient.

Wie aus einer Zusammenschau der **Fig. 8 und 9**, die die Verschlusskappe 48 sowie das Aufnahmeteil 47 jeweils in Einzeldarstellung zeigen, mit **Fig. 10** deutlich wird, die eine formschlüssig ausgebildete Verbindungseinrichtung 50 zwischen einem Öffnungsrand 51 der Zugriffsöffnung 49 am Aufnahmeteil 47 und der Verschlusskappe 48 zeigt, ist die Verbindungseinrichtung 50 als Rasteinrichtung ausgebildet. Zur Applikation der Verschlusskappe 48 am Aufnahmeteil 47 wird die Verschlusskappe 48 mit seitlichen Längsführungen 52 auf Längsstege 53 (**Fig. 9**) am Aufnahmeteil 47 axial aufgeschoben, wobei die Endstellung durch ein Einrasten einer an der Verschlusskappe 48 ausgebildeten Rastnase 62 in eine korrespondierend im Aufnahmeteil 47 ausgebildete Rastöffnung 63 definiert ist.

Wie die **Fig. 10** zeigt, ist am rückwärtigen Ende des Aufnahmeteils 47 eine Kontakteinrichtungs-Aufnahme 54 ausgebildet, in der eine Kontakteinrichtung 55 mit einem Befestigungsteil 56 angeordnet ist. Das Befestigungsteil 56 bildet einen Schenkel der insgesamt etwa U-förmig ausgebildeten Kontakteinrichtung 55, wobei eine Kontakteinrichtungsbasis 57 zur Kontaktierung mit einer Kontaktlitze 58 einer Kohlebürste 59 dient und der weitere, parallel zur Kontakteinrichtungsbasis 57 ausgebildete Schenkel als Anschlussende 60 zum Anschluss eines hier nicht näher dargestellten Stromleiters dient.

Wie ferner aus **Fig. 10** ersichtlich, wird durch die Verschlusskappe 48 die Zugriffsöffnung 49, die einen Zugriff auf die Kontakteinrichtung 55 ermöglicht, abgedeckt. Dabei ist das Anschlussende 60 aus einer Bodenöffnung 61 (**Fig. 8**) der Verschlusskappe 48 herausgeführt, so dass von außen eine Verbindung des nicht dargestellten Stromleiters mit dem Anschlussende 60 möglich ist. Das rückwärtige Ende des Aufnahmeteils 47 ist im Bereich der Kontakteinrichtungs-Aufnahme 54 kanalartig ausgebildet, mit einem, hier im Querschnitt U-förmig ausgebildeten Schutzkanal 64, der das Anschlussende 60 an drei Seiten umgibt. Abweichend von der Darstellung in **Fig. 10** ist es natürlich auch möglich, den Schutzkanal als geschlossenen Kanalquerschnitt auszubilden, so dass das Anschlussende 60 bis auf eine nach unten weisende Zugriffsöffnung allseitig umschlossen ist und eine entsprechende Abschirmung des Anschlussendes 60 die Folge ist.

## Patentansprüche

1. Kohlebürstenmodul (10, 35, 45) mit einem Bürstenhalter (46) zur Aufnahme einer Kohlebürste (12, 59) und zur Anordnung der Kohlebürste auf einer Oberfläche eines Bürstenträgers (39) eines Elektromotors, derart, dass sich die Kohlebürste parallel zu einer Befestigungsebene (41) des Bürstenträgers erstreckt, und die Kohlebürste über eine elektrisch leitend mit der Kohlebürste verbundene und eine Wandung des Bürstenhalters durchdringende Kontakteinrichtung (14, 32, 55) mit einem Stromleiter kontaktierbar ist, wobei der Bürstenhalter eine Befestigungseinrichtung zur Befestigung des Bürstenhalters auf dem Bürstenträger und eine Führungseinrichtung zur längsverschiebbaren Führung der Kohlebürste im Bürstenhalter aufweist, wobei die Kontakteinrichtung (14) und die Kohlebürste (12) eine zusammenhängend ausgebildete Montageeinheit (13) ausbilden und die Kontakteinrichtung mit einem Anschlussende (19), das zum Anschluss an einen Stromleiter dient, mechanisch fixiert in einer Wandausnehmung (21) des Aufnahmeteils (11) aufgenommen ist, **dadurch gekennzeichnet,**
**dass** sowohl die Befestigungseinrichtung (40, 43) als auch die Führungseinrichtung (29) des Bürstenhalters in ein und demselben Bauteil vereint durch ein einstückig aus einem Isolationswerkstoff hergestelltes Aufnahmeteil (11, 31, 47) gebildet ist.

2. Kohlebürstenmodul (10, 35, 45) mit einem Bürstenhalter (46) zur Aufnahme einer Kohlebürste (12, 59) und zur Anordnung der Kohlebürste auf einer Oberfläche eines Bürstenträgers (39) eines Elektromotors, derart, dass sich die Kohlebürste parallel zu einer Befestigungsebene (41) des Bürstenträgers erstreckt, und die Kohlebürste über eine elektrisch leitend mit der Kohlebürste verbundene und eine Wandung des Bürstenhalters durchdringende Kontakteinrichtung (14, 32, 55) mit einem Stromleiter kontaktierbar ist, wobei der Bürstenhalter eine Befestigungseinrichtung zur Befestigung des Bürstenhalters auf dem Bürstenträger und eine Führungseinrichtung zur längsverschiebbaren Führung der Kohlebürste im Bürstenhalter aufweist, wobei das Aufnahmeteil (31) mit der Kontakteinrichtung (32) einstückig zusammenhängend ausgebildet ist, derart, dass ein Anschlussende (34) der Kontakteinrichtung, das zum Anschluss an einen Stromleiter dient, durch eine Umformung des Anschlussendes (34) mit dem Kunststoffmaterial des Aufnahmeteils formschlüssig in eine Wandung (33) des Aufnahmeteils eingebettet aufgenommen ist, **dadurch gekennzeichnet,**
**dass** sowohl die Befestigungseinrichtung (40, 43) als auch die Führungseinrichtung (29) des Bürstenhalters in ein und demselben Bauteil vereint durch ein einstückig aus einem Isolationswerkstoff hergestelltes Aufnahmeteil (11, 31, 47) gebildet ist.

3. Kohlebürstenmodul nach einem der vorangehenden Ansprüche,
**dadurch gekennzeichnet,**
**dass** das Aufnahmeteil (11, 31,47) einen Aufnahmequerschnitt (22) aufweist, der durch Überlagerung eines rechteckigen Führungsquerschnitts (23) zur Ausbildung der Führungseinrichtung (29) mit einem Bohrungsquerschnitt (24) zur Ausbildung eines Aufnahmeraums für eine Federeinrichtung gebildet ist.

4. Kohlebürstenmodul nach einem der vorangehenden Ansprüche,
**dadurch gekennzeichnet,**
**dass** das Aufnahmeteil (47) im Bereich einer Kontakteinrichtung-Aufnahme (54) eine Zugriffsöffnung (49) zum Zugriff auf die Kontakteinrichtung (55) aufweist.

5. Kohlebürstenmodul nach Anspruch 4,
**dadurch gekennzeichnet,**
**dass** das Aufnahmeteil (47) zum Verschluss der Zugriffsöffnung (49) mit einer Verschlusskappe (48) versehen ist.

6. Kohlebürstenmodul nach Anspruch 5,
**dadurch gekennzeichnet,**
**dass** die Verschlusskappe (48) lösbar mit einem Öffnungsrand (51) der Zugriffsöffnung (49) verbunden ist.

7. Kohlebürstenmodul nach Anspruch 5 oder 6,
**dadurch gekennzeichnet,**
**dass** die Verschlusskappe (48) formschlüssig mit dem Aufnahmeteil (47) verbunden ist.

## Claims

1. A carbon brush module (10, 35, 45), comprising a brush holder (46) for receiving a carbon brush (12, 59) and for arranging the carbon brush on a surface of a brush support (39) of an electric motor such that the carbon brush extends parallel to an attachment plane (41) of the brush support, and the carbon brush can make contact with a current conductor via a contact device (14, 32, 55) which is connected to the carbon brush in an electrically conducting manner and penetrates a wall of the brush holder, wherein the brush holder comprises an attachment device for attaching the brush holder on the brush support and a guide device for longitudinally guiding the carbon brush in the brush holder in a displaceable manner, wherein the contact device (14) and the carbon brush (12) form a mounting assembly (13), which is formed contiguously, and the contact device is received in a wall recess (21) of the receiving part (11) with a connection end (19) in a mechanically fixed manner, said connection end (19) serving for being connected to a current conductor,
**characterized in that**
combined in one and the same component, both the attachment device (40, 43) and the guide device (29) of the brush holder are formed by a receiving part (11, 31, 47) produced in one piece from an insulating material.

2. A carbon brush module (10, 35, 45), comprising a brush holder (46) for receiving a carbon brush (12, 59) and for arranging the carbon brush on a surface of a brush support (39) of an electric motor such that the carbon brush extends parallel to an attachment plane (41) of the brush support, and the carbon brush can make contact with a current conductor via a contact device (14, 32, 55) which is connected to the carbon brush in an electrically conducting manner and penetrates a wall of the brush holder, wherein the brush holder comprises an attachment device for attaching the brush holder on the brush support and a guide device for longitudinally guiding the carbon brush in the brush holder in a displaceable manner, wherein the receiving part (31) is formed contiguously in one piece with the contact device (32) such that a connection end (34) of the contact device, which serves for being connected to a current conductor, is received and embedded in a wall (33) of the receiving part in a form-fit manner by means of encasing the connection end (34) with the plastic material of the receiving part
characterized in thatcombined in one and the same component, both the attachment device (40, 43) and the guide device (29) of the brush holder are formed by a receiving part (11, 31, 47) produced in one piece from an insulating material.

3. The carbon brush module according to any one of the preceding claims,
**characterized in that**
the receiving part (11, 31, 47) comprises a receiving cross-section (22), which is formed by overlapping a rectangular guide cross-section (23) for forming the guide device (29) with a bore cross-section (24) for forming a receiving space for a spring device.

4. The carbon brush module according to any one of the preceding claims,
**characterized in that**
in the area of a contact device reception (54), the receiving part (47) comprises an access opening (49) for accessing the contact device (55).

5. The carbon brush module according to claim 4,
**characterized in that**
for closing the access opening (49), the receiving part (47) is provided with a closing cap (48).

6. The carbon brush module according to claim 5,
**characterized in that**
the closing cap (48) is detachably connected to an opening rim (51) of the access opening (49).

7. The carbon brush module according to claim 5 or 6,
**characterized in that**
the closing cap (48) is connected to the receiving part (47) in a form-fit manner.

## Revendications

1. Module (10, 35, 45)de balai de charbon, comprenant un porte-balai (46) pour recevoir un balai (12, 59) de charbon et pour disposer le balai de charbon sur une surface d'un support (39) de balai d'un moteur électrique de quelle manière que le balai de charbon s'étende parallèlement à un plan (41) de fixation du support de balai et le balai de charbon puisse être contacté avec un conducteur au moyen d'un dispositif (14, 32, 55) de contact qui est relié au balai de charbon dans une manière électriquement conductrice et traverse une paroi du porte-balai, ledit porte-balai comprenant un dispositif de fixation pour fixer le porte-balai sur le support de balai et un dispositif de guidage pour guider longitudinalement le balai de charbon dans le porte-balai dans une manière déplaçable, ledit dispositif (14) de contact et le balai (12) de charbon formant un ensemble (13) de montage, qui est formé unitairement, et le dispositif de contact est reçu dans un évidement (21) de paroi de la pièce (11) de réception avec un extrémité (19) de connexion dans une manière fixée, ladite extrémité (19) de connexion servant à être reliée à un conducteur,
**caractérisé en ce qu'**
en combinaison dans un seul et même composant, le dispositif (40, 43) de fixation ainsi que le dispositif (29) de guidage du porte-balai sont formées par une a pièce (11, 31, 47) de réception produite en une pièce d'un matériau isolant.

2. Module (10, 35, 45) de balai de charbon, comprenant un porte-balai (46) pour recevoir un balai (12, 59) de charbon et pour disposer le balai de charbon sur une surface d'un support (39) de balai d'un moteur électrique de quelle manière que le balai de charbon s'étende parallèlement à un plan (41) de fixation du support de balai et le balai de charbon puisse être contacté avec un conducteur au moyen d'un dispositif (14, 32, 55) de contact qui est relié au balai de charbon dans une manière électriquement conductrice et traverse une paroi du porte-balai, ledit porte-balai comprenant un dispositif de fixation pour fixer le porte-balai sur le support de balai et un dispositif de guidage pour guider longitudinalement le balai de charbon dans le porte-balai dans une manière déplaçable, la pièce (31) de réception étant formée unitairement en une pièce avec le dispositif (32) de contact de telle manière qu'une extrémité (34) de connexion du dispositif de contact, qui sert à être reliée à un conducteur, soit reçue et intégrée dans une paroi (33) de la pièce de réception par liaison de forme par enfermer l'extrémité (34) de connexion avec du matériau plastique de la pièce de réception
**caractérisé en ce qu'**
en combinaison dans un seul et même composant, le dispositif (40, 43) de fixation ainsi que le dispositif (29) de guidage du porte-balai sont formés par une pièce (11, 31, 47) de réception produite en une pièce d'un matériau isolant.

3. Module de balai de charbon selon l'une quelconque des revendications précédentes,
**caractérisé en ce que**
la pièce (11, 31, 47) de réception comprend une section (22) transversale de réception, qui est formée par une superposition d'une section (23) transversale de guidage rectangulaire pour former le dispositif (29) de guidage avec une section (24) transversale de perçage pour former un espace de réception pour un dispositif de ressort.

4. Module de balai de charbon selon l'une quelconque des revendications précédentes,
**caractérisé en ce que**
dans la zone d'une réception (54) de dispositif de contact, la pièce (47) de réception comprend une ouverture (49) d'accès pour accéder le dispositif (55) de contact.

5. Module de balai de charbon selon la revendication 4,
**caractérisé en ce que**
pour fermer l'ouverture (49) d'accès, la pièce (47) de réception est pourvue d'un capuchon (48) de fermeture.

6. Module de balai de charbon selon la revendication 5,
**caractérisé en ce que**
le capuchon (48) de fermeture est relié à un bord (51) d'ouverture de l'ouverture (49) d'accès de manière détachable.

7. Module de balai de charbon selon la revendication 5 ou 6,
**caractérisé en ce que**
le capuchon (48) de fermeture est relié à la pièce (47) de réception par liaison de forme.
